# EUROPEAN PATENT APPLICATION

(11) **EP 4 722 843 A1**
(43) Date of publication of application: **08.04.2026**
(21) Application number: 24943686.6
(22) Date of filing: 28.06.2024
(51) Int. Cl.: G05D 1/46

(54) **MOBILE PLATFORM CONTROL METHOD, MOBILE PLATFORM POSITION DETERMINATION METHOD, MOBILE PLATFORM CONTROL DEVICE, AND STORAGE MEDIUM**

(71) Applicant: Arashi Vision Inc., Shenzhen, Guangdong 518101 (CN)
(72) Inventor: WEI, Wusi, Shenzhen, Guangdong 518101 (CN); LIN, Jiamin, Shenzhen, Guangdong 518101 (CN)
(74) Representative: Michalski Hüttermann & Partner Patentanwälte mbB
(86) International application number: PCT/CN2024/102669
(87) International publication number: WO 2026/000402

(57) **Abstract**

Embodiments of the present application disclose a movable platform control method, a movable platform position determination method, a movable platform control apparatus, and a storage medium, wherein the movable platform control method includes: determining a first area and a second area, wherein the first area is a movable area of the movable platform, the second area is a prohibited movement area of the movable platform, and the first area and the second area are complementary sets of each other in a spatial set; obtaining a first position of the movable platform and a second position within the second area; determining A relative position of the movable platform with respect to the first area based on the first position and the second position; determining a control strategy for the movable platform based on the relative position; and controlling the movable platform based on the control strategy.

## Description

### TECHNICAL OF FIELD

The present application relates to control technology, and in particular to a movable platform control method, a movable platform position determination method, a movable platform control apparatus, and a storage medium.

### BACKGROUND

Moving a movable platform (such as a UAV) within a designated area can, to a certain extent, prevent unsafe accidents. Related technologies use a distance between a UAV's location and a no-fly area to determine a relative position of the UAV within the area.

The present application makes a change in at least determining the relative position between the movable platform and the movable area of the movable platform.

### SUMMARY

Embodiments of the present application provide a movable platform control method, a movable platform position determination method, a movable platform control apparatus, and a storage medium.

In a first aspect, one embodiment of the present application provides a method for controlling a movable platform, comprising:
determining a first area and a second area, wherein the first area is a movable area of the movable platform, the second area is a prohibited movement area of the movable platform, and the first area and the second area are complementary sets within a spatial set;
obtaining a first position of the movable platform and a second position within the second area;
determining a relative position of the movable platform with respect to the first area based on the first position and the second position;
determining a control strategy for the movable platform according to the relative position, and controlling the movable platform based on the control strategy.

In a second aspect, one embodiment of the present application provides a method for determining a position of a movable platform, comprising: determining a first area and a second area, wherein the first area is a movable area of the movable platform, the second area is a prohibited movement area of the movable platform, and the first area and the second area are complementary sets within a spatial set;
obtaining a first position of the movable platform and a second position within the second area; and
determining the relative position of the movable platform with respect to the first area according to the first position and the second position.

In a third aspect, one embodiment of the present application provides a movable platform control apparatus, comprising a memory and a processor, wherein the memory stores a computer program that can be run on the processor, and when the processor executes the program, it implements the steps in the movable platform control method in the first aspect or the steps in the movable platform position determination method in the second aspect.

In a fourth aspect, one embodiment of the present application provides a computer-readable storage medium having a computer program stored thereon, which, when executed by a processor, implements the steps in the movable platform control method in the first aspect or the steps in the movable platform position determination method in the second aspect.
one embodiment of the present application provides a movable platform control method, a movable platform position determination method, a movable platform control apparatus and a storage medium, which determine a first area and a second area, wherein the first area is a movable area of the movable platform, the second area is a prohibited movement area of the movable platform, and the first area and the second area are complementary sets of each other in a complete spatial set; obtain a first position of the movable platform and a second position within the second area; determine a relative position of the movable platform with respect to the first area based on the first position and the second position; determine a control strategy for the movable platform based on the relative position, and control the movable platform based on the control strategy. The present application provides a solution for accurately determining the relative position of the movable platform with respect to the movable area based on the first position of the movable platform and the second position within the prohibited movement area, and then achieve safe control of the movable platform by calling the control strategy corresponding to the relative position.

### BRIEF DESCRIPTION OF THE DRAWINGS

FIG. 1 is a schematic flow chart of a method for controlling a movable platform according to one embodiment of the present application;
FIG. 2 is a first schematic diagram of determining whether a UAV is at an edge area of a permitted flight area according to one embodiment of the present application ;
FIG. 3 is a second schematic diagram of determining whether a UAV is at an edge area of a permitted flight area according to one embodiment of the present application ;
FIG. 4 is a first schematic diagram of determining whether a UAV is within a permitted flight area according to an embodiment of the present application ;
FIG. 5 is a third schematic diagram of determining whether a UAV is at an edge area of a permitted flight area according to one embodiment of the present application ;
FIG. 6 is a first schematic diagram of determining whether a UAV is outside a permitted flight area according to one embodiment of the present application ;
FIG. 7 is a second schematic diagram of determining whether a UAV is within a permitted flight area according to one embodiment of the present application ;
FIG. 8 is a second schematic diagram of determining whether a UAV is outside a permitted flight area according to one embodiment of the present application;
FIG. 9 is a flow chart of a method for determining a position of a movable platform provided in an embodiment of the present application;
FIG. 10 is a schematic structural diagram of a movable platform control apparatus provided in an embodiment of the present application.

### DETAILED DESCRIPTION

To make the purpose, technical solutions and advantages of embodiments of the present application clearer, the specific technical solutions of the present application will be further described in detail below in conjunction with the drawings in the embodiments of the present application. The following embodiments are used to illustrate the present application but are not intended to limit the scope of the present application.

Unless otherwise defined, all technical and scientific terms used herein have the same meaning as commonly understood by those skilled in the art to which this application pertains. The terms used herein are for the purpose of describing the embodiments of this application only and are not intended to limit this application.

In the following description, reference is made to "some embodiments," which describes a subset of all possible embodiments, but it will be understood that "some embodiments" may be the same subset or different subsets of all possible embodiments and may be combined with each other without conflict.

It should be pointed out that the terms "first\second\third" involved in the embodiments of the present application are merely used to distinguish similar objects and do not represent a specific ordering of the objects. It can be understood that "first\second\third" can be interchanged with a specific order or sequence where permitted, so that the embodiments of the present application described here can be implemented in an order other than that illustrated or described here.

Some embodiments of the present application provide a method for controlling a movable platform. In actual application, the hardware end implementing the movable platform control method can be a control device, which can be set in a movable platform, a movable platform control apparatus, or a server. Alternatively, one of the three options, the movable platform, the movable platform control apparatus, and the server, is selected to dispose a part of the movable platform control device, and the other part of the movable platform control device is disposed in another one of the three options not selected. The control device is an intelligent device that can be used to control the movable platform to perform related operations, such as a movable terminal device including a smart remote control or a smart phone.

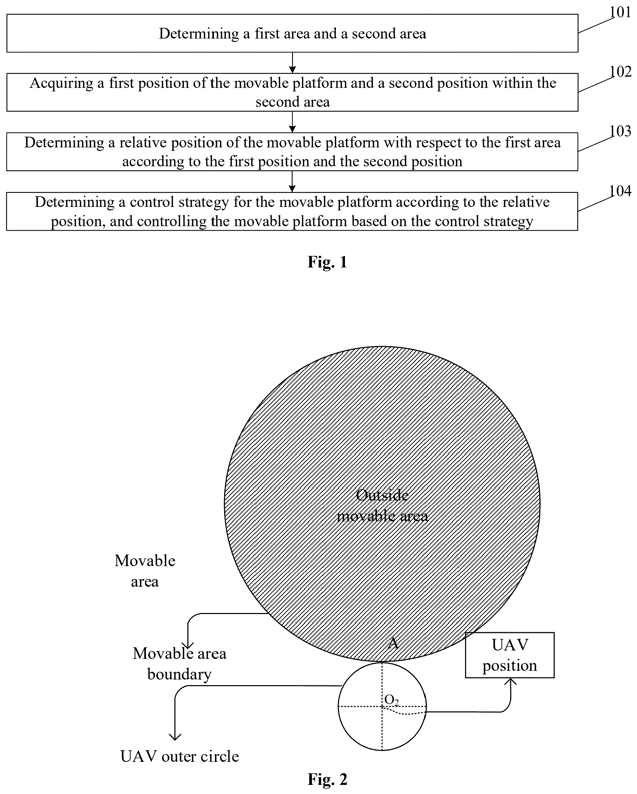

As shown in FIG. 1, in one embodiment, the movable platform control method includes:
Step 101: determining a first area and a second area.

The first area is a movable area of the movable platform, the second area is a prohibited movement area of the movable platform, and the first area and the second area are complementary sets to each other in a spatial set.

In practical applications, the first area and the second area can be irregular polygonal areas (eg, an area formed by connecting multiple straight lines and/or curves) or regular polygonal areas (eg, a circular area, a rectangular area, etc.).

In actual applications, the movable platform can be an Unmanned Aerial Vehicle (UAV), an unmanned vehicle (or a movable vehicle), an unmanned ship, a movable robot, or other movable devices. A communication connection is established between the control device and the movable platform.

In some embodiments of the present application, the UAV is taken as an example of a movable platform and a smart remote control is taken as an example of the control device, and the movable platform control method provided in the present application is explained.

In a feasible scenario, a space is regarded as a complete set, and the movable area of the UAV is called a permitted flight area. The permitted flight area and the no-fly area are complementary sets of each other, and a sum of the two is a complete set of space .

Step 102: acquiring a first position of the movable platform and a second position within the second area.

In practical applications, any point O₁ in the second area is taken and its position is the second position, and the movable platform is regarded as a point *O*₂ and its position is the first position.

In practical applications, the movable platform may be equipped with a positioning device. This positioning device may be a satellite positioning device, a Global Positioning System (GPS) module, or a Visual Inertial Odometer (VIO), etc., and this application does not impose specific limitations. The movable platform can use the positioning device to determine its own position.

In some embodiments, the control device may provide a human-computer interaction interface for the user, display a map on the human-computer interaction interface, and accept a user's operation of delimiting a region on the map to determine the first area and the second area. The control device may also accept a user's operation of specifying a location on the map to determine the second position. The map may also load and display the first position.

Step 103: determining a relative position of the movable platform with respect to the first area according to the first position and the second position.

In actual application, the relative position of the movable platform with respect to the movable area is determined based on the first position of the movable platform and the second position in the prohibited movement area, so as to achieve accurate determination of the position of the movable platform relative to the movable area. For example, it is determined that the movable platform is in the movable area, that is, a non-edge area; it is determined that the movable platform is at an edge area of the movable area; or it is determined that the movable platform is not in the movable area, that is, in a prohibited movement area.

Step 104: determining a control strategy for the movable platform according to the relative position, and controlling the movable platform based on the control strategy.

In actual application, after determining the relative position of the movable platform with respect to the movable area, a control strategy corresponding to the relative position is called to control the movable platform to ensure flight safety of the movable platform and safety of apparatus of the movable platform itself.

The movable platform control method provided in an embodiment of the present application is performed by determining a first area and a second area, wherein the first area is a movable area of the movable platform and the second area is a prohibited movement area of the movable platform, and the first area and the second area are complementary sets within a spatial set; obtaining a first position of the movable platform and a second position within the second area; determining a relative position of the movable platform with respect to the first area based on the first position and the second position; determining a control strategy for the movable platform based on the relative position, and controlling the movable platform based on the control strategy. One embodiment of the present application provides a solution for accurately determining the relative position of the movable platform with respect to the movable area based on the first position of the movable platform and the second position within the prohibited movement area, and then achieving safe control of the movable platform by invoking a control strategy corresponding to the relative position.

In some embodiments, the control strategy includes one of the following strategies:
the movable platform is in a non-edge area of the movable area, and the movable platform is permitted to move according to configured movement parameters;
the movable platform is at an edge area of the movable area and the movable platform is prohibited from moving outside the movable area; or
the movable platform is outside the movable area, and the movable platform is prohibited from moving or is controlled to stop moving.

In actual application, when the movable platform is a UAV, the UAV is permitted to fly according to the configured flight parameters in the non-edge area of the movable area; in the edge area of the movable area, the UAV is prohibited from flying outside the movable area (in this case, the UAV can also be controlled to deflect its course or turn around); outside the movable area, the UAV is prohibited from taking off or being controlled to land. This application uses control strategies corresponding to relative positions to reasonably control various events of the UAV in the non-edge area of the movable area, the edge area of the movable area, and outside the movable area, thereby ensuring safety of the UAV's flight and safety of the UAV's own apparatus, and ensuring that the UAV can normally perform related tasks.

In some embodiments, step 103 of determining the relative position of the movable platform with respect to the first area based on the first position and the second position includes:

First, determining a first area expression of a third area where the movable platform is located based on the first position and a first radius, wherein the first radius is determined based on a braking distance of the movable platform;

In actual application, a first area expression (eg, a first area equation) of the third area where the UAV is located is determined according to the first position and the first radius of the UAV.

Next, obtaining a second area expression for the second area associated with the second position.

In actual application, an area expression of the prohibited movement area may be generated in advance, and in the relative position determination stage, a corresponding second region expression may be found from the pre-generated area expression according to the second position.

In practical applications, when the designated second area, i.e., the prohibited movement area, is a regular area (e.g., a circular area), the second position can be a center of a circular area. Based on the second position and the second radius (which can be obtained once the second area is designated), a second area expression (e.g., a second area equation) for the prohibited movement area is determined. In other words, regardless of whether the prohibited movement area is a regular area or an irregular area, the present application can obtain the second area expression for the prohibited movement area associated with the second position.

Finally, a first analytical solution of the second area expression and the first area expression is calculated, and the relative position is determined according to the first analytical solution.

In actual application, when the first area expression and the second area expression are obtained, the first analytical solution of the second area expression and the first area expression is calculated by seeking an analytical solution, and the relative position of the UAV with respect to the movable area is determined according to the first analytical solution, thereby achieving accurate determination of the position of the UAV relative to the movable area.

In some embodiments, determining the relative position according to the first analytical solution includes:
if the number of the first analytical solutions is one or two, it is determined that the movable platform is at the edge area of the movable area.

In practical applications, the first analytical solution to the second area expression and the first area expression is calculated by finding an analytical solution. This can be solved by a system of simultaneous equations. If the system has at least one solution given by a finite number of common operations, the system is said to have an analytical solution. Here, if the number of first analytical solutions is one or two, the UAV is determined to be at the edge area of the movable area.

In practical applications, the first analytical solution to the second area expression and the first area expression is calculated by analytically solving a system of simultaneous equations. If the system of equations does not have a solution given by a finite number of common operations, it is said to have no analytical solution. Furthermore, by calculating a dot product of vectors, the UAV's position relative to the movable area can be accurately determined.

First, a sixth position in the second area is obtained.

In practical application, select any point Q in the prohibited movement area.

Next, obtain a seventh position where a line connecting the sixth position and the first position intersects with the first area.

In actual application, the seventh position M where the line connecting Q and the first position, i.e., the current position *O*₂ of the UAV, intersects with the boundary of the permitted flight area is obtained.

a third dot product of a vector from the sixth position to the seventh position and a vector from the first position to the seventh position is calculated, and the relative position is determined according to the third dot product.

In actual application, the third dot product is Q̅M̅ · *̅O̅*̅₂̅M̅, and the relative position of the UAV with respect to the permitted flight area is determined based on Q̅M̅ · *̅O̅*̅₂̅*̅M̅*̅.

In practical applications, if the third dot product is greater than zero, it is determined that the movable platform is in the movable area; if the third dot product is less than zero, it is determined that the movable platform is outside the movable area.

As shown in Fig. 2, the UAV creates a virtual outer circle based on its current position *O*₂ and a radius. An expression for this outer circle, f(x,y), is obtained. A radius of the outer circle can be dynamically adjusted based on the UAV's braking distance. When the outer circle, f(x ,y), intersects the boundary of the permitted flight area, g(x,y), the UAV is at the edge area of the permitted flight area.

In some embodiments, step 103 of determining the relative position of the movable platform and the first area based on the first position and the second position includes:
First, obtaining a third position of the movable platform after it moves from the first position along a moving direction;
In actual application, the UAV is at the first position at the current moment and continues to move along the moving direction, and its position at the next moment is the third position. The moving direction of the UAV as it moves along the movement trajectory during the movement process can be pre-set. Of course, the user can flexibly adjust the moving direction of the UAV during the movement process, and this application does not specifically limit this.

Second, determining a route expression of the movable platform's moving route based on the first position and the third position;
In practical applications, a straight line expression (eg, a straight line equation) during the movement of the UAV is established based on the first position and the third position.

Again, obtaining a second area expression for the second area associated with the second position;
In actual application, an area expression of the prohibited movement area may be generated in advance, and in the relative position determination stage, a corresponding second area expression may be found from the pre-generated area expression according to the second position.

In practical applications, when the designated second area, i.e., the prohibited movement area, is a regular area (e.g., a circular area), the second position can be a center of the circular area. Based on the second position and a second radius (which can be obtained once the second area is designated), a second area expression (e.g., a second area equation) for the prohibited movement area is determined. In other words, regardless of whether the prohibited movement area is a regular area or an irregular area, the present application can obtain the second area expression for the prohibited movement area associated with the second position.

Finally, a second analytical solution of the route expression and the second area expression is calculated, and the relative position is determined according to the second analytical solution.

In actual application, when the route expression and the second area expression are obtained, the second analytical solution of the second area expression and the route expression is calculated by seeking an analytical solution. The relative position of the UAV with respect to the movable area is determined according to the second analytical solution, thereby achieving accurate determination of the position of the UAV relative to the movable area.

In some embodiments, determining the relative position according to the second analytical solution includes:
if the number of the second analytical solution is one, it is determined that the movable platform is at the edge area of the movable area.

In practical applications, the second analytical solution to the second area expression and the route expression is calculated by finding an analytical solution. This can be solved using a system of simultaneous equations. If a solution exists that can be obtained by a finite number of common operations, the system is said to have an analytical solution. Here, if the number of second analytical solution is one, the UAV is determined to be at the edge area of the movable area. If no second analytical solution exists, the movable platform is determined to be within the movable area.

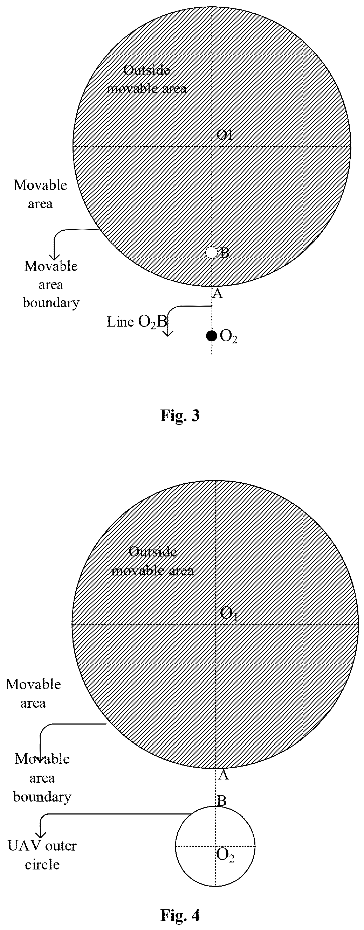

As shown in Fig. 3, the UAV calculates its next position B in real time based on its current position *O*₂ and the moving direction. Based on its current position *O*₂ and position B at the next moment, it obtains the equation of the line f(x,y). When the equation of the line f(x,y) has an analytical solution to the boundary g(x,y) of the permitted flight area (at this time, as shown in Fig. 2, the line segment *O*₂B intersects the no-fly area at A), the UAV is at the edge area of the permitted flight area.

In some embodiments, step 103 of determining the relative position of the movable platform and the first area based on the first position and the second position includes:
first, obtaining the line connecting the first position and the second position, a fourth position where the line intersecting with the third area, and a fifth position where the line intersecting with the second area;
In actual application, the first position of the movable platform and the second position in the prohibited movement area are connected to obtain a connecting line between the first position and the second position; then the fourth position where the connecting line intersects with the third area where the movable platform is located and the fifth position where the connecting line intersects with the prohibited movement area are obtained.

Second, a first dot product of a vector from the fifth position to the second position and a vector from the fourth position to the fifth position is calculated, and the relative position is determined based on the first dot product.

In actual application, a line is connected between any point O₁ in the prohibited movement area and the UAV position O₂, and the line intersects with an outer circle of the UAV at point B (corresponding to the fourth position) and intersects with the boundary of the permitted flight area at point A (corresponding to the fifth position). The first dot product is O̅₁̅A̅ · A̅B̅, and the relative position of the UAV with respect to the permitted flight area is determined based on O̅₁̅A̅ · A̅B̅.

In some embodiments, determining the relative position according to the first dot product includes:
if the first dot product is greater than zero, it is determined that the movable platform is in the movable area;
if the first dot product is less than or equal to zero, it is determined that the movable platform is at the edge area of the movable area.

In actual application, when the above-mentioned specific positions are obtained, the first dot product O̅₁̅A̅ · A̅B̅ is calculated, and the relative position of the UAV with respect to the movable area is determined based on O̅₁̅A̅ · A̅B̅ to achieve accurate determination of the position of the UAV relative to the movable area.

As shown in Fig. 4, if O̅₁̅A̅ · A̅B̅ > 0, the two circles are separated, which means that the UAV is in the permitted flight area .

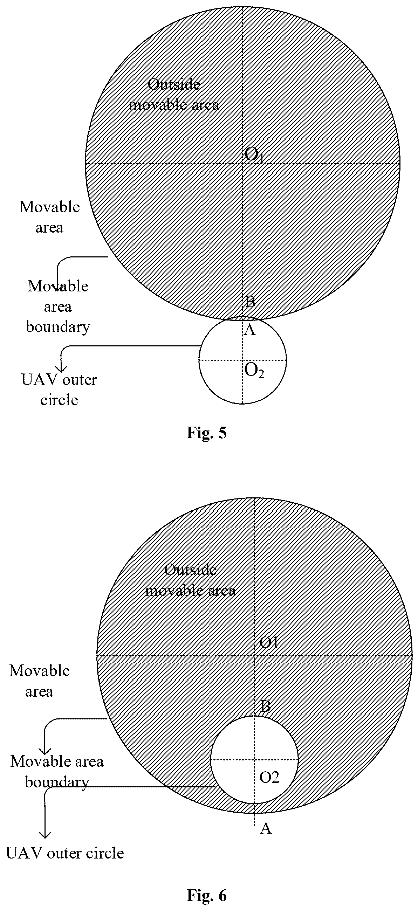

As shown in Fig. 5, if O̅₁̅A̅ · A̅B̅ ≤ 0, the two circles intersect or are tangent, and the UAV is at the edge area of the permitted flight area.

In some embodiments, step 103 of determining the relative position of the movable platform and the first area based on the first position and the second position includes:
first, obtaining a line connecting the first position and the second position, a fourth position where the line intersecting with the third area where the movable platform is located, and a fifth position where the line intersecting with the second area;
In actual application, the first position of the movable platform and the second position in the prohibited movement area are connected to obtain a connecting line between the first position and the second position; then the fourth position where the connecting line intersects with the third area where the movable platform is located and the fifth position where the connecting line intersects with the prohibited movement area are obtained.

Second, a second dot product of the vector from the fifth position to the second position and the vector from the fifth position to the first position is calculated, and the relative position is determined according to the second dot product.

In actual application, a line is connected between any point in the prohibited movement area O₁ to the UAV position O₂, and the line intersects with the outer circle of the UAV at point B (corresponding to the fourth position) and intersects with the boundary of the permitted flight area at point A (corresponding to the fifth position). The second dot product is O̅₁̅A̅ · O̅₂̅A̅, and the relative position of the UAV with respect to the permitted flight area is determined based on O̅₁̅A̅ · O̅₂̅A̅.

In some embodiments, determining the relative position based on the second dot product includes:
if the second dot product is greater than zero, it is determined that the movable platform is outside the movable area.

In actual application, when the above-mentioned specific positions are obtained, the second dot product O̅₁̅A̅ · O̅₁̅A̅ is calculated, and the relative position of the UAV and the movable area is determined based on O̅₁̅A̅ · O̅₂̅A̅ to achieve accurate determination of the position of the UAV relative to the movable area.

As shown in FIG. 6, if O̅₁̅A̅ · O̅₂̅A̅ > 0, the UAV is outside the permitted flight area, i.e., in the prohibited flight area.

In some embodiments of the present application, a ray can be emitted from the current position P of the UAV in any direction, and the number of intersections of this ray with the boundary of the permitted flight area can be counted. If the number of intersections is an even number, the UAV is within the permitted flight area; if the number of intersections is an odd number, the UAV is outside the permitted flight area and within the prohibited flight area.

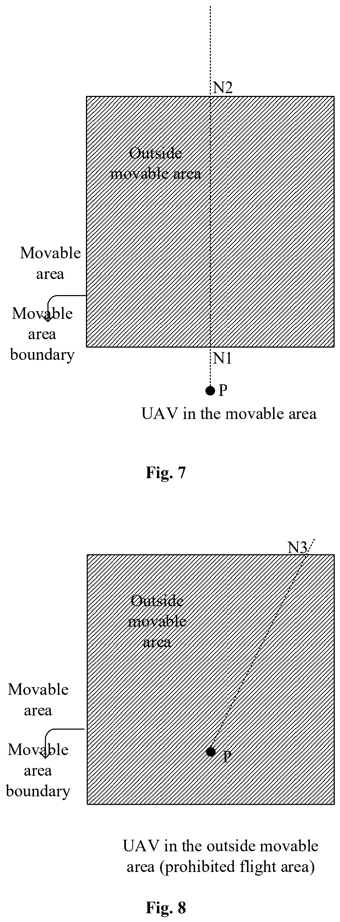

As shown in Fig. 7, the number of intersections between the ray and the boundary of the permitted flight area is 2 (N1 and N2), confirming that the UAV is within the permitted flight area. As shown in Fig. 8, the number of intersections between the ray and the boundary of the permitted flight area is 1 (N3), confirming that the UAV is outside the permitted flight area but within the prohibited flight area.

As can be seen from the above, the movable platform control method provided in some embodiments of this application can accurately determine the relative position of the movable platform with respect to the movable area based on the first position of the movable platform and the second position within the prohibited movement area. In the process of determining the relative position, the accurate relative position can be obtained by using a method of finding an analytical solution to a system of simultaneous equations, calculating the dot product of vectors, or counting the number of intersections between rays and areas. Ultimately, the movable platform is safely controlled by invoking a control strategy corresponding to the relative position. This not only improves flight safety of the UAV, but also effectively ensures safety of the UAV itself by matching a reasonable control strategy.

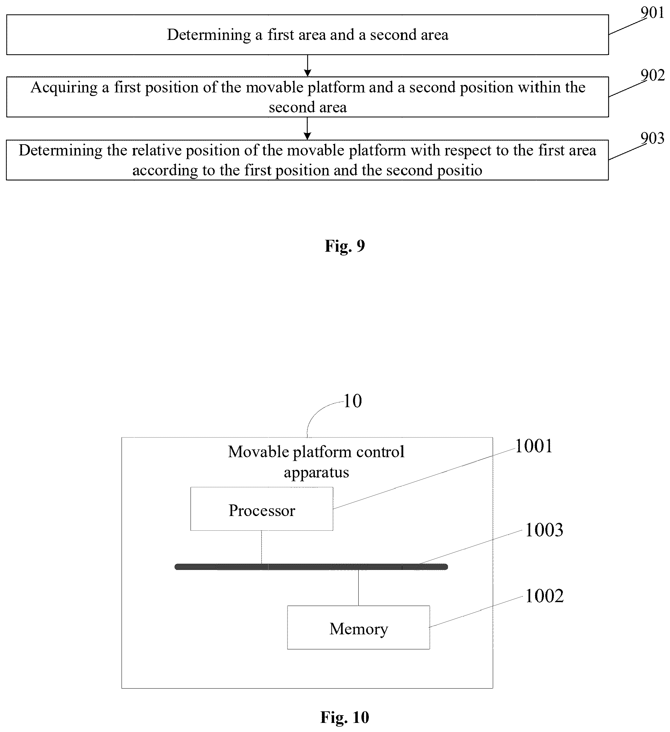

As shown in FIG. 9, in one embodiment, the method for determining the position of a movable platform includes:
Step 901: determining a first area and a second area.

The first area is a movable area of the movable platform, the second area is a prohibited movement area of the movable platform, and the first area and the second area are complementary sets of each other in a spatial set;
Step 902: acquiring a first position of the movable platform and a second position within the second area; and
Step 903: determining the relative position of the movable platform with respect to the first area according to the first position and the second position.

Some embodiments of the present application provide a method for determining the position of a movable platform. In actual application, the hardware end implementing the method for determining the position of a movable platform can be a control device, which can be set in the movable platform, the control apparatus of the movable platform, or a server; or, a portion of the control device of the movable platform is set in one of the movable platform, the control apparatus of the movable platform, and the server, and another portion of the control device of the movable platform is set in another of the movable platform, the control apparatus of the movable platform, and the server. The control device is an intelligent device that can be used to control the movable platform to perform related operations, such as a movable terminal device including a smart remote control or a smart phone.

In a feasible scenario, the movable platform, the control apparatus of the movable platform and the server constitute a movable platform control system, and the server executes the above-mentioned movable platform position determination method, thereby determining the relative position of the movable platform with respect to the movable area based on the first position of the movable platform and the second position in the prohibited movement area; further, the server sends the relative position of the movable platform with respect to the movable area to the control apparatus of the movable platform, thereby triggering the control apparatus of the movable platform to determine the control strategy of the movable platform according to the relative position, and control the movable platform based on the control strategy; in this way, the server side provides computing power to determine the relative position, which reduces the computing power consumption of the control apparatus of the movable platform and can also speed up the processing efficiency of complex tasks.

In some embodiments, step 903 of determining the relative position of the movable platform with respect to the first area based on the first position and the second position includes: determining a first area expression of a third area where the movable platform is located based on the first position and a first radius, wherein the first radius is set according to a braking distance of the movable platform; obtaining a second area expression of the second area associated with the second position; calculating a first analytical solution of the second area expression and the first area expression, and determining the relative position based on the first analytical solution.

In some embodiments, determining the relative position according to the first analytical solution includes:
if the number of the first analytical solutions is one or two, it is determined that the movable platform is at the edge area of the movable area.

In some embodiments, determining the relative position according to the first analytical solution includes:
if the first analytical solution does not exist, obtaining a sixth position in the second area;
obtaining a seventh position where the line connecting the sixth position and the first position intersects with the first area;

A third dot product of the vector from the sixth position to the seventh position and the vector from the first position to the seventh position is calculated, and the relative position is determined according to the third dot product.

In some embodiments, determining the relative position according to the third dot product includes:
if the third dot product is greater than zero, it is determined that the movable platform is in the movable area;
if the third dot product is less than zero, it is determined that the movable platform is outside the movable area.

In some embodiments, step 903 of determining the relative position of the movable platform with respect to the first area based on the first position and the second position includes: obtaining a third position of the movable platform after moving along a moving direction from the first position; determining a route expression of the moving route of the movable platform based on the first position and the third position; obtaining a second area expression of the second area associated with the second position; calculating a second analytical solution of the route expression and the second area expression, and determining the relative position based on the second analytical solution.

In some embodiments, determining the relative position according to the second analytical solution includes:
if the number of the second analytical solution is one, it is determined that the movable platform is at the edge area of the movable area.
if the second analytical solution does not exist, it is determined that the movable platform is within the movable area.

In some embodiments, step 903 of determining the relative position of the movable platform with respect to the first area based on the first position and the second position includes: obtaining the line connecting the first position and the second position, the fourth position wherein the line intersecting with the third area, and the fifth position where the line intersecting with the second area; calculating the first dot product of the vector from the fifth position to the second position and the vector from the fourth position to the fifth position, and determining the relative position based on the first dot product.

In some embodiments, determining the relative position according to the first dot product includes:
if the first dot product is greater than zero, it is determined that the movable platform is in the movable area; and
if the first dot product is less than or equal to zero, it is determined that the movable platform is at the edge area of the movable area.

In some embodiments, step 903 of determining the relative position of the movable platform with respect to the first area based on the first position and the second position includes: obtaining a line connecting the first position and the second position, a fourth position wherein the line intersecting with the third area where the movable platform is located, and a fifth position where the line intersecting with the second area; calculating a second dot product of a vector from the fifth position to the second position and a vector from the fifth position to the first position, and determining the relative position based on the second dot product.

In some embodiments, determining the relative position based on the second dot product includes:
If the second dot product is greater than zero, it is determined that the movable platform is outside the movable area.

It should be noted that the description of the above method for determining the position of a movable platform is similar to the description of the same steps in the above embodiments of the method for controlling a movable platform. For technical details not disclosed in the embodiments of the method for determining the position of a movable platform of this application, please refer to the description of the above embodiments of the method for controlling a movable platform of this application for understanding.

An embodiment of the present application provides a movable platform control apparatus, which can be applied to a movable platform control method provided in the embodiment corresponding to FIG. 1. As shown in FIG. 10, the movable platform control apparatus 10 includes: a processor 1001, a memory 1002, and a communication bus 1003, wherein:
The communication bus 1003 is used to implement communication connection between the processor 1001 and the memory 1002.

The memory 1002 stores a computer program. When the computer program is executed by the processor 1001, the processor 1001 is configured to: determine a first area and a second area, wherein the first area is a movable area of the movable platform, the second area is a prohibited movement area of the movable platform, and the first area and the second area are complementary sets of each other in a complete spatial set; obtain a first position of the movable platform and a second position within the second area; determine a relative position of the movable platform with respect to the first area based on the first position and the second position; determine a control strategy of the movable platform based on the relative position, and control the movable platform based on the control strategy.

In some embodiments, the processor 1001 is configured to: when the movable platform is in a non-edge area of the movable area, allow the movable platform to move according to the configured movement parameters; when the movable platform is in an edge area of the movable area, prohibit the movable platform from moving outside the movable area; and when the movable platform is outside the movable area, prohibit the movable platform from moving or control the movable platform to stop moving.

In some embodiments, the processor 1001 is configured to: determine a first area expression of a third area where the movable platform is located based on the first position and a first radius, wherein the first radius is set based on the braking distance of the movable platform; obtain a second area expression of the second area associated with the second position; calculate a first analytical solution of the second area expression and the first area expression, and determine the relative position based on the first analytical solution.

In some embodiments, the processor 1001 is configured to: if the number of the first analytical solutions is one or two, determine that the movable platform is at the edge area of the movable area.

In some embodiments, the processor 1001 is configured to: if the first analytical solution does not exist, obtain a sixth position within the second area; obtain a seventh position where the line connecting the sixth position and the first position intersects with the first area; calculate a third dot product of a vector from the sixth position to the seventh position and a vector from the first position to the seventh position, and determine the relative position based on the third dot product.

In some embodiments, the processor 1001 is configured to: determine that the movable platform is in the movable area if the third dot product is greater than zero; and determine that the movable platform is outside the movable area if the third dot product is less than zero.

In some embodiments, the processor 1001 is configured to: obtain a third position of the movable platform after it moves along a moving direction from the first position; determine a route expression of a moving route of the movable platform based on the first position and the third position; obtain a second area expression of the second area associated with the second position; calculate a second analytical solution of the route expression and the second area expression, and determine the relative position based on the second analytical solution.

In some embodiments, the processor 1001 is configured to: if the number of the second analytical solutions is one, determine that the movable platform is at the edge area of the movable area; if no second analytical solution exists, determine that the movable platform is within the movable area.

In some embodiments, the processor 1001 is configured to: obtain a line connecting the first position and the second position, a fourth position wherein the line intersecting with the third area, and a fifth position where the line intersecting with the second area; calculate a first dot product of a vector from the fifth position to the second position and a vector from the fourth position to the fifth position, and determine the relative position based on the first dot product.

In some embodiments, the processor 1001 is configured to: determine that the movable platform is in the movable area if the first dot product is greater than zero; and determine that the movable platform is at the edge area of the movable area if the first dot product is less than or equal to zero.

In some embodiments, the processor 1001 is configured to: obtain a line connecting the first position and the second position, a fourth position where the line intersecting with the third area where the movable platform is located, and a fifth position where the line intersecting with the second area; calculate a second dot product of a vector from the fifth position to the second position and a vector from the fifth position to the first position, and determine the relative position based on the second dot product.

In some embodiments, the processor 1001 is configured to: determine that the movable platform is outside the movable area if the second dot product is greater than zero.

One embodiment of the present application provides a movable platform control apparatus, which can be applied to the movable platform position determination provided in the embodiment corresponding to FIG. 9. As shown in FIG. 10, the movable platform control apparatus 10 includes: a processor 1001, a memory 1002, and a communication bus 1003, wherein:
The communication bus 1003 is used to implement communication connection between the processor 1001 and the memory 1002 .

The memory 1002 stores a computer program. When the computer program is executed by the processor 1001, the processor 1001 is configured to: determine a first area and a second area, wherein the first area is a movable area of the movable platform, the second area is a prohibited movement area of the movable platform, and the first area and the second area are complementary sets of each other in a complete spatial set; obtain a first position of the movable platform and a second position within the second area; and determine a relative position of the movable platform with respect to the first area based on the first position and the second position.

In some embodiments, the processor 1001 is configured to: determine a first area expression of a third area where the movable platform is located based on the first position and a first radius, wherein the first radius is set based on a braking distance of the movable platform; obtain a second area expression of the second area associated with the second position; calculate a first analytical solution of the second area expression and the first area expression, and determine the relative position based on the first analytical solution.

In some embodiments, the processor 1001 is configured to: if the number of the first analytical solutions is one or two, determine that the movable platform is at the edge area of the movable area.

In some embodiments, the processor 1001 is configured to: if the first analytical solution does not exist, obtain a sixth position within the second area; obtain a seventh position where the line connecting the sixth position and the first position intersects with the first area; calculate a third dot product of a vector from the sixth position to the seventh position and a vector from the first position to the seventh position, and determine the relative position based on the third dot product.

In some embodiments, the processor 1001 is configured to: determine that the movable platform is in the movable area if the third dot product is greater than zero; and determine that the movable platform is outside the movable area if the third dot product is less than zero.

In some embodiments, the processor 1001 is configured to: obtain a third position of the movable platform after it moves along a moving direction from the first position; determine a route expression of the moving route of the movable platform based on the first position and the third position; obtain a second area expression of the second area associated with the second position; calculate a second analytical solution of the route expression and the second area expression, and determine the relative position based on the second analytical solution.

In some embodiments, the processor 1001 is configured to: if the number of the second analytical solution is one, determine that the movable platform is at the edge area of the movable area; if no second analytical solution exists, determine that the movable platform is within the movable area.

In some embodiments, the processor 1001 is configured to: obtain a line connecting the first position and the second position, a fourth position where the line intersecting with the third area, and a fifth position where the line intersecting with the second area; calculate a first dot product of a vector from the fifth position to the second position and a vector from the fourth position to the fifth position, and determine the relative position based on the first dot product.

In some embodiments, the processor 1001 is configured to: determine that the movable platform is in the movable area if the first dot product is greater than zero; and determine that the movable platform is at the edge area of the movable area if the first dot product is less than or equal to zero.

In some embodiments, the processor 1001 is configured to: obtain a line connecting the first position and the second position, a fourth position where the line intersecting with the third area where the movable platform is located, and a fifth position where the line intersecting with the second area; calculate a second dot product of a vector from the fifth position to the second position and a vector from the fifth position to the first position, and determine the relative position based on the second dot product.

In some embodiments, the processor 1001 is configured to: determine that the movable platform is outside the movable area if the second dot product is greater than zero.

It should be noted that the specific implementation process of the steps executed by the processor in these embodiments can refer to the implementation process in the method provided in the embodiments corresponding to Fig. 1 or Fig. 9, and will not be repeated here.

An embodiment of the present application provides a computer-readable storage medium on which a computer program is stored. When the computer program is executed by a processor, the implementation process of the method provided in the above embodiments is implemented, which will not be repeated here.

One embodiment of the present application provides a computer product, including a computer program, which can be executed by one or more processors to implement the implementation process of the method provided in the embodiments corresponding to Fig. 1 or Fig. 9, which will not be repeated here.

The above-mentioned computer storage medium/memory can be a read-only memory (ROM), a programmable read-only memory (PROM), an erasable programmable read-only memory (EPROM), an electrically erasable programmable read-only memory (EEPROM), a magnetic random access memory (FRAM), a flash memory (Flash Memory), a magnetic surface storage device, an optical disc, or a compact disc read-only memory (CD-ROM); it can also be various terminals that include one or any combination of the above-mentioned memories, such as movable phones, computers, tablet devices, personal digital assistants, etc.

It should be understood that the "one embodiment" or "an embodiment" or "an embodiment of the present application" or "the aforementioned embodiment" or "some embodiments" or "some implementation methods" mentioned throughout the specification means that the specific features, structures or characteristics related to the embodiment are included in at least one embodiment of the present application. Therefore, "in one embodiment" or "in an embodiment" or "an embodiment of the present application" or "the aforementioned embodiment" or "some embodiments" or "some implementation methods" appearing throughout the specification do not necessarily refer to the same embodiment. In addition, these specific features, structures or characteristics can be combined in one or more embodiments in any suitable manner. It should be understood that in the various embodiments of the present application, the value of the serial numbers of the above-mentioned processes does not mean the order of execution. The execution order of each process should be determined by its function and internal logic, and should not constitute any limitation on the implementation process of the embodiments of the present application. The serial numbers of the embodiments of the present application mentioned above are for description only and do not represent the advantages and disadvantages of the embodiments.

In several embodiments provided in this application, it should be understood that the disclosed devices and methods can be implemented in other ways. The device embodiments described above are merely schematic. For example, the division of the units is merely a logical function division. In actual implementation, there may be other division methods, for example: multiple units or components can be combined, or can be integrated into another system, or some features can be ignored or not executed. In addition , the coupling , direct coupling , or communication connection between the components shown or discussed can be through some interfaces, and the indirect coupling or communication connection of the devices or units can be electrical , mechanical or other forms.

The units described above as separate components may or may not be physically separated, and the components displayed as units may or may not be physical units; they may be located in one place or distributed across multiple network units; some or all of the units may be selected according to actual needs to achieve the purpose of the scheme of this embodiment.

All functional units in some embodiments of the present application can be integrated into one processing unit, or each unit can be a separate unit, or two or more units can be integrated into one unit; the above-mentioned integrated units can be implemented in the form of hardware or in the form of hardware plus software functional units.

The methods disclosed in several method embodiments provided in this application can be arbitrarily combined without conflict to obtain new method embodiments.

The features disclosed in several product embodiments provided in this application can be arbitrarily combined without conflict to obtain new product embodiments.

The features disclosed in several method or device embodiments provided in this application can be arbitrarily combined without conflict to obtain new method embodiments or device embodiments.

Those skilled in the art will understand that all or part of steps of the above-mentioned method embodiment can be completed by hardware related to program instructions, and the aforementioned program can be stored in a computer-readable storage medium. When the program is executed, it executes the steps of the above-mentioned method embodiment; and the aforementioned storage medium includes: movable storage devices, read-only memories (ROM), magnetic disks or optical disks, and other media that can store program codes.

Alternatively, if the above-mentioned integrated unit of the present application is implemented in the form of a software functional module and sold or used as an independent product, it can also be stored in a computer-readable storage medium. Based on this understanding, the technical solution of the embodiment of the present application, or the part that contributes to the relevant technology, can be embodied in the form of a software product. The computer software product is stored in a storage medium and includes a number of instructions for enabling a computer device (which can be a personal computer, server, or network device, etc.) to execute all or part of the methods described in each embodiment of the present application. The aforementioned storage medium includes: various media that can store program codes, such as movable storage devices, ROMs, magnetic disks, or optical disks.

It is worth noting that the drawings in the embodiments of the present application are only for illustrating the schematic positions of the various components on the terminal device and do not represent actual positions in the terminal device. The actual positions of the various components or areas may be changed or offset accordingly according to actual conditions (for example, the structure of the terminal device), and the proportions of different parts of the terminal device in the drawings do not represent the actual proportions.

The above are merely some embodiments of the present application, but the scope of protection of the present application is not limited thereto. Any changes or substitutions that can be easily conceived by a person skilled in the art within the technical scope disclosed in this application should be included in the scope of protection of this application. Therefore, the scope of protection of this application should be based on the scope of protection of the claims.

## Claims

1. A method for controlling a movable platform, the method comprising:
determining a first area and a second area, wherein the first area is a movable area of the movable platform, the second area is a prohibited movement area of the movable platform, and the first area and the second area are complementary sets of each other in a spatial set;
acquiring a first position of the movable platform and a second position within the second area;
determining a relative position of the movable platform with respect to the first area based on the first position and the second position;
determining a control strategy for the movable platform according to the relative position; and
controlling the movable platform based on the control strategy.

2. The method according to claim 1, wherein the control strategy comprises one of following strategies:
the movable platform is in a non-edge area of the movable area and permitted to move according to configured movement parameters;
the movable platform is in an edge area of the movable area and prohibited from moving outside the movable area; or
the movable platform is outside the movable area and prohibited from moving or is controlled to stop moving.

3. The method according to claim 1 or 2, wherein the determining the relative position of the movable platform with respect to the first area based on the first position and the second position comprises:
determining a first area expression for a third area where the movable platform is located based on the first position and a first radius, wherein the first radius is set based on a braking distance of the movable platform;
obtaining a second area expression for the second area associated with the second position;
calculating a first analytical solution of the second area expression and the first area expression, and
determining the relative position according to the first analytical solution.

4. The method according to claim 3, wherein the determining the relative position according to the first analytical solution comprises:
if the number of the first analytical solutions is one or two, it is determined that the movable platform is in the edge area of the movable area.

5. The method according to claim 3, wherein the determining the relative position according to the first analytical solution comprises:
if the first analytical solution does not exist, obtaining a sixth position within the second area;
obtaining a seventh position where a line connecting the sixth position and the first position intersects the first area;
calculating a third dot product of a vector from the sixth position to the seventh position and a vector from the first position to the seventh position; and
determining the relative position according to the third dot product.

6. The method according to claim 5, wherein the determining the relative position according to the third dot product comprises:
if the third dot product is greater than zero, determining that the movable platform is within the movable area; and
if the third dot product is less than zero, determining that the movable platform is outside the movable area.

7. The method according to claim 1 or 2, wherein the determining the relative position of the movable platform with respect to the first area based on the first position and the second position comprises:
acquiring a third position of the movable platform after the movable platform moves from the first position along a moving direction;
determining a route expression of a moving route of the movable platform according to the first position and the third position;
obtaining a second area expression for the second region associated with the second position;
calculating a second analytical solution of the route expression and the second area expression, and
determining the relative position according to the second analytical solution.

8. The method according to claim 7, wherein the determining the relative position according to the second analytical solution comprises:
if the number of the second analytical solution is one, determining that the movable platform is in the edge area of the movable area.

9. The method according to claim 7, wherein the determining the relative position according to the second analytical solution comprises:
if the second analytical solution does not exist, determining that the movable platform is in the movable area.

10. The method according to claim 1 or 2, wherein the determining the relative position of the movable platform with respect to the first area based on the first position and the second position comprises:
obtaining a line connecting the first position and the second position, a fourth position where the line intersecting with a third area where the movable platform is located, and a fifth position where the line intersecting with the second area;
calculating a first dot product of a vector from the fifth position to the second position and a vector from the fourth position to the fifth position; and
determining the relative position according to the first dot product.

11. The method according to claim 10, wherein the determining the relative position according to the first dot product comprises:
if the first dot product is greater than zero, determining that the movable platform is within the movable area; and
if the first dot product is less than or equal to zero, determining that the movable platform is in the edge area of the movable area.

12. The method according to claim 1 or 2, wherein the determining the relative position of the movable platform with respect to the first area based on the first position and the second position comprises:
obtaining a line connecting the first position and the second position, a fourth position where the line intersecting with a third area where the movable platform is located, and a fifth position where the line intersecting with the second area;
calculating a second dot product of a vector from the fifth position to the second position and a vector from the fifth position to the first position; and
determining the relative position according to the second dot product.

13. The method according to claim 12, wherein the determining the relative position according to the second dot product comprises:
if the second dot product is greater than zero, determining that the movable platform is outside the movable area.

14. A method for determining a position of a movable platform, the method comprising:
determining a first area and a second area, wherein the first area is a movable area of the movable platform, the second area is a prohibited movement area of the movable platform, and the first area and the second area are complementary sets of each other in a spatial set;
acquiring a first position of the movable platform and a second position within the second area; and
determining a relative position of the movable platform with respect to the first area according to the first position and the second position.

15. The method according to claim 14, wherein the determining the relative position of the movable platform with respect to the first area based on the first position and the second position comprises:
determining a first area expression for a third area where the movable platform is located based on the first position and a first radius, wherein the first radius is set based on a braking distance of the movable platform;
obtaining a second area expression for the second area associated with the second position;
calculating a first analytical solution of the second area expression and the first area expression; and
determining the relative position according to the first analytical solution.

16. The method according to claim 15, wherein the determining the relative position according to the first analytical solution comprises:
if the number of the first analytical solution is one or two, determining that the movable platform is in an edge area of the movable area.

17. The method according to claim 15, wherein the determining the relative position according to the first analytical solution comprises:
if the first analytical solution does not exist, obtaining a sixth position within the second area;
obtaining a seventh position where a line connecting the sixth position and the first position intersects the first area;
calculating a third dot product of a vector from the sixth position to the seventh position and a vector from the first position to the seventh position; and
determining the relative position according to the third dot product.

18. The method according to claim 17, wherein the determining the relative position according to the third dot product comprises:
if the third dot product is greater than zero, determining that the movable platform is in the movable area; and
if the third dot product is less than zero, determining that the movable platform is outside the movable area.

19. The method according to claim 14, wherein the determining the relative position of the movable platform with respect to the first area based on the first position and the second position comprises:
acquiring a third position of the movable platform after the movable platform moves from the first position along a moving direction;
determining a route expression of a moving route of the movable platform according to the first position and the third position;
obtaining a second region expression for the second region associated with the second position;
calculating a second analytical solution of the route expression and the second area expression; and
determining the relative position according to the second analytical solution.

20. The method according to claim 19, wherein the determining the relative position according to the second analytical solution comprises:
if the number of the second analytical solution is one, determining that the movable platform is in an edge area of the movable area.

21. The method according to claim 19, wherein the determining the relative position according to the second analytical solution comprises:
if the second analytical solution does not exist, determining that the movable platform is within the movable area.

22. The method according to claim 14, wherein the determining the relative position of the movable platform with respect to the first area based on the first position and the second position comprises:
obtaining a line connecting the first position and the second position, a fourth position where the line intersecting with a third area where the movable platform is located, and a fifth position where the line intersecting with the second area;
calculating a first dot product of a vector from the fifth position to the second position and a vector from the fourth position to the fifth position; and
determining the relative position according to the first dot product.

23. The method according to claim 22, wherein the determining the relative position according to the first dot product comprises:
if the first dot product is greater than zero, determining that the movable platform is in the movable area; and
if the first dot product is less than or equal to zero, determining that the movable platform is in the edge area of the movable area.

24. The method according to claim 14, wherein the determining the relative position of the movable platform with respect to the first area based on the first position and the second position comprises:
obtaining a line connecting the first position and the second position, a fourth position where the line intersecting with a third area where the movable platform is located, and a fifth position where the line intersecting with the second area;
calculating a second dot product of a vector from the fifth position to the second position and a vector from the fifth position to the first position; and
determining the relative position according to the second dot product.

25. The method according to claim 24, wherein the determining the relative position according to the second dot product comprises:
if the second dot product is greater than zero, determining that the movable platform is outside the movable area.

26. A movable platform control apparatus, comprising a memory and a processor; the memory storing a computer program, wherein when the processor executes the computer program, the processor is configured to:
determine a first area and a second area, wherein the first area is a movable area of the movable platform, the second area is a prohibited movement area of the movable platform, and the first area and the second area are complementary sets within a spatial set;
obtain a first position of the movable platform and a second position within the second area;
determine a relative position of the movable platform with respect to the first area based on the first position and the second position .

27. The movable platform control apparatus according to claim 26, wherein the processor is further configured to determine a control strategy for the movable platform according to the relative position, and control the movable platform based on the control strategy.

28. The movable platform control apparatus according to claim 27, wherein the control strategy comprises one of following strategies:
the movable platform is in a non-edge area of the movable area and permitted to move according to configured movement parameters;
the movable platform is in an edge area of the movable area and prohibited from moving outside the movable area; or
the movable platform is outside the movable area and prohibited from moving or is controlled to stop moving.

29. The movable platform control apparatus according to any one of claims 26 to 28 , wherein the processor is further configured to:
determine a first area expression of a third area where the movable platform is located based on the first position and a first radius, wherein the first radius is set based on a braking distance of the movable platform;
obtain a second region expression for the second region associated with the second location;
calculate a first analytical solution of the second area expression and the first area expression; and
determine the relative position according to the first analytical solution.

30. The movable platform control apparatus according to claim 29, wherein the processor is further configured to determine that the movable platform is in an edge area of the movable area if the number of the first analytical solutions is one or two.

31. The movable platform control apparatus according to claim 29, wherein the processor is further configured to:
obtain a sixth position in the second area if the first analytical solution does not exist;
obtain a seventh position where a line connecting the sixth position and the first position intersects the first area;
calculate a third dot product between a vector from the sixth position to the seventh position and a vector from the first position to the seventh position; and
determine the relative position according to the third dot product.

32. The movable platform control apparatus according to claim 31, wherein the processor is further configured to:
determine that the movable platform is in the movable area if the third dot product is greater than zero; and
determine that the movable platform is outside the movable area if the third dot product is less than zero.

33. The movable platform control apparatus according to any one of claims 26 to 28 , wherein the processor is further configured to:
obtain a third position of the movable platform after the movable platform moves along a moving direction from the first position;
determine a route expression of a movement route of the movable platform based on the first position and the third position;
obtain a second region expression for the second region associated with the second location;
calculate a second analytical solution of the route expression and the second area expression; and
determine the relative position according to the second analytical solution.

34. The movable platform control apparatus according to claim 33, wherein the processor is further configured to determine that the movable platform is in an edge area of the movable area if the number of the second analytical solution is one.

35. The movable platform control apparatus according to claim 33, wherein the processor is further configured to determine that the movable platform is in the movable area if the second analytical solution does not exist.

36. The movable platform control device according to any one of claims 26 to 28, wherein the processor is configured to:
obtain a line connecting the first position and the second position, a fourth position where the line intersecting with a third area where the movable platform is located, and a fifth position where the line intersecting with the second area;
calculate a first dot product between a vector from the fifth position to the second position and a vector from the fourth position to the fifth position; and
determine the relative position according to the first dot product.

37. The movable platform control apparatus according to claim 36, wherein the processor is further configured to determine that the movable platform is in the movable area if the first dot product is greater than zero; and to determine that the movable platform is in the edge area of the movable area if the first dot product is less than or equal to zero.

38. The movable platform control apparatus according to any one of claims 26 to 28, wherein the processor is further configured to:
obtain a line connecting the first position and the second position, a fourth position where the line intersecting with a third area where the movable platform is located, and a fifth position where the line intersecting with the second area;
calculate a second dot product between a vector from the fifth position to the second position and a vector from the fifth position to the first position; and
determine the relative position according to the second dot product.

39. The movable platform control apparatus according to claim 38, wherein the processor is further configured to determine that the movable platform is outside the movable area if the second dot product is greater than zero.

40. A computer storage medium storing a computer program, wherein the computer program, when executed by a processor, implements the method according to any one of claims 1 to 13 or 14 to 25.
